Europäisches Patentamt

European Patent Office

Office européen des brevets

(19)

(11) Veröffentlichungsnummer: **0 236 847 B1**

(12) # EUROPÄISCHE PATENTSCHRIFT

(45) Veröffentlichungstag der Patentschrift: **14.08.91**

(51) Int. Cl.⁵: **B60N 3/06**

(21) Anmeldenummer: **87102658.9**

(22) Anmeldetag: **25.02.87**

(54) **Fussstütze.**

(30) Priorität: **05.03.86 DE 3607157**

(43) Veröffentlichungstag der Anmeldung:
**16.09.87 Patentblatt 87/38**

(45) Bekanntmachung des Hinweises auf die
Patenterteilung:
**14.08.91 Patentblatt 91/33**

(84) Benannte Vertragsstaaten:
**AT BE CH DE ES FR GB IT LI NL SE**

(56) Entgegenhaltungen:
**DE-A- 1 425 970**
**US-A- 2 591 598**
**US-A- 2 747 924**

**PATENT ABSTRACTS OF JAPAN, Band 6, Nr.
246 (M-176)[1124], 4. Dezember 1982; & JP-
A-57 144 140 (KOITO KOGYO K.K.) 06-09-1982**

(73) Patentinhaber: **Ignaz Vogel GmbH & Co KG,
Fahrzeugsitze
Kleinsteinbacher Strasse 42-44
W-7500 Karlsruhe 41-Stu(DE)**

(72) Erfinder: **Vogel, Ignaz
Kleinsteinbacher Strasse 44
W-7500 Karlsruhe 41-Stu(DE)**

(74) Vertreter: **Trappenberg, Hans
Postfach 1909
W-7500 Karlsruhe 1(DE)**

Rank Xerox (UK) Business Services

## Beschreibung

Die Erfindung betrifft eine Fußstütze für Fahrgastsitze, bei der die Fußauflage beidseitig an Fußstützenhebeln angebracht ist, die ihrerseits in an der Rückseite eines Fahrgastsitzes angeordneten Lagerböcken verschwenkbar gelagert sind, wobei die Verschwenkbewegung durch einen Klinkenmechanismus so zu steuern ist, daß bei der Aufwärtsbewegung mehrere Raststufen einstellbar sind, die bei der Abwärtsbewegung von der höchsten Lage aus zu überfahren sind.

Fahrgastsitze sind insbesondere in Omnibussen, Schiffen und Flugzeugen stets in Reihen hintereinander angeordnet, so daß an der Rückseite dieser Fahrgastsitze Fußstützen zum Abstützen der Person angeordnet sein können, die auf dem dahinter angeordneten Fahrgastsitz Platz genommen hat. Der durch diese Fußstützen gebotene Komfort hat sich so durchgesetzt, daß Bestuhlungen ohne derartige Fußstützen nicht mehr verkaufsfähig sind. Damit gehören sie zu den unverzichtbaren Bestandteilen einer derartigen Bestuhlung von Personen-Beförderungsfahrzeugen und unterliegen auch den gleichen Forderungen. Sie müssen also wirtschaftlich herstellbar, einfach montierbar, wartungsfrei und auch nach längerer Benutzungszeit klapperfrei und auch weitgehend geräuschlos zu bedienen sein.

Bei bekannten Fußstützen dieser Art bereitet immer wieder Schwierigkeiten die Klappersicherheit, die geräuschlose Bedienbarkeit und die wirtschaftliche Herstellbarkeit. Aufgabe der Erfindung ist es daher, diese Forderungen zu erfüllen, also eine wirtschaftlich herstellbare Fußstütze anzugeben, die weitgehend geräuschlos zu bedienen und in jeder Lage klapperfrei ist.

Erreicht wird dies in erfindungsgemäßer Weise dadurch, daß jeweils endständig im Fußstützenhebel eine durch eine Blattfeder belastete Sperrklinke verschwenkbar angeordnet und am Lagerbock ein Rastenkäfig für diese Sperrklinke angebracht ist, der in beiden Extremlagen der Fustützenhebel auf die Sperrklinke einwirkende Anschläge aufweist und daß an der Sperrklinke ein Höcker vorgesehen ist, auf den sich die belastende Feder in der unteren Extremlage aufschiebt. Hierbei wird die Sperrklinke zweckmäßigerweise aus verschließfestem Kunststoff hergestellt.

Neben den Fußstützenhebeln, die sowieso vorhanden sein müssen, um die Fußauflage zu tragen, sind zusätzlich nunmehr nur noch drei Teile zum Bilden des Gesperres notwendig, die Sperrklinke, die sie belastende Blattfeder und der Rastenkäfig mit seinen Anschlägen. Die Sperrklinke ist als Kunststoffteil nicht nur sehr billig herstellbar, sondern dämpft auch durch ihre geringfügige Elastizität die beim Einschnappen des Gesperres entstehenden Schläge, wie auch eventuell verbleibende Klappergeräusche. Die Blattfeder ist ebenfalls ein Maschinenelement, das sehr preiswert herstellbar ist. Beide Teile, sowohl die Sperrklinke wie auch die Blattfeder, können ohne zusätzliche Bauelemente in den Fußstützenhebeln untergebracht werden, wobei die geringfügige Schwenkbewegung der Sperrklinke dadurch herbeizuführen ist, daß die Sperrklinke in eine entsprechende Ausnehmung des jeweiligen Fußstützenhebels einzufügen ist. In gleich einfacher Weise kann auch die Blattfeder jeweils in den Fußstützenhebel eingefügt sein. Dieser Teil des Gesperres erfordert also bei der erfindungsgemäßen Konstruktion keine zusätzlichen teuren Bauteile und auch keinen zusätzlichen Raum. Der endständig die Fußstützenhebel umgebende Rastenkäfig kann als Stanzteil oder als Gußteil gefertigt werden, ist also auch auf sehr wirtschaftliche Art und Weise herstellbar.

Die Steuerung der Verschwenkbewegung beziehungsweise die Steuerung der Sperrklinke im Rastenkäfig erfolgt auf einfachste Weise dadurch, daß bei der Aufwärtsbewegung die Sperrklinke durch den Druck der Blattfeder in die jeweilige Raste eingeschoben wird, so daß die Fußstützenhebel und damit auch die Fußauflage jeweils von Stufe zu Stufe hochgestellt werden können. In der oberen Extremlage stößt die Sperrklinke an den entsprechenden Anschlag im Rastenkäfig, wodurch die Blattfeder über den an der Sperrklinke vorgesehenen Höcker hochgeschoben wird und damit die Sperrklinke in dieser Lage festhält. Die Sperrklinke kann dadurch nicht mehr in den Rastenkäfig eingreifen, wodurch also die Fußstützenhebel mit der Fußauflage in die untere Extremlage geführt werden können. Dort schlägt die Sperrklinke wiederum an den entsprechenden unteren Anschlag an, wodurch die Blattfeder von dem Höcker der Sperrklinke heruntergezogen wird, so daß das gleiche Spiel wieder von vorne beginnen kann.

Um sicher die Sperrklinke in der ausgerasteten Stellung zu halten, empfiehlt es sich, sie entständig umzufalzen, an daß die Kante des Falzes auf die Fläche des an der Sperrklinke angeordneten Höckers zu liegen kommt.

Ingesamt ergibt sich damit eine Fußstütze, die äußerst preiswert herstellbar, weitgehend geräuschlos zu bedienen und auch klapperfrei ist.

Auf der Zeichnung ist ein Ausführungsbeispiel einer derart aufgebauten Fußstütze schematisch dargestellt, und zwar zeigen:

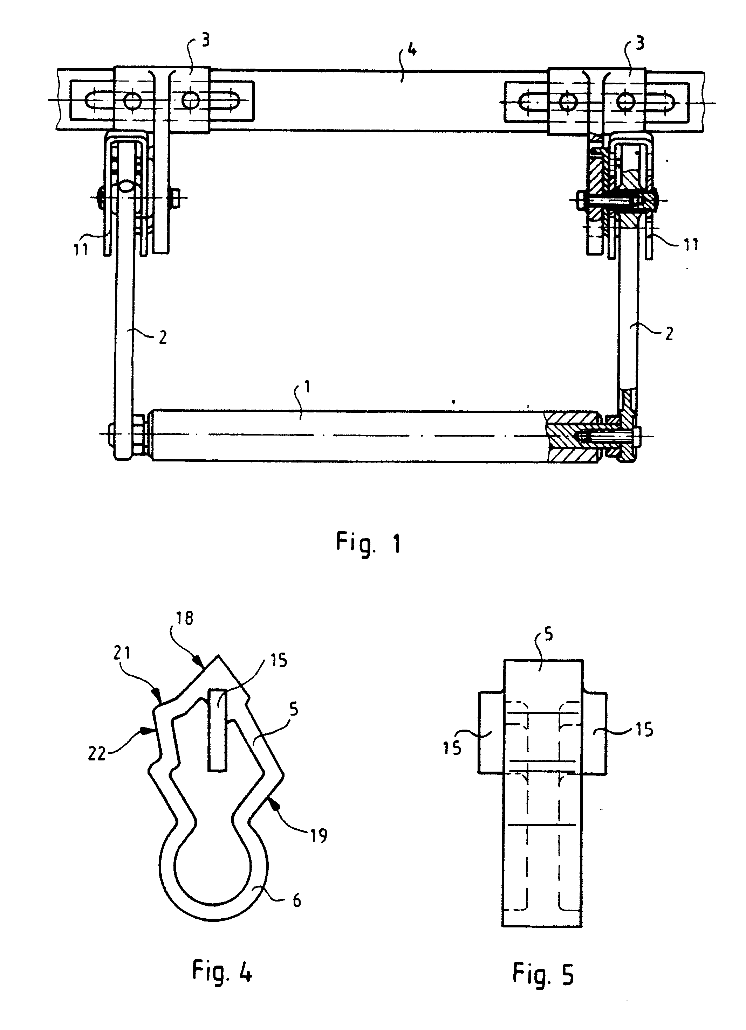

Fig. 1   eine Gesamtansicht der Fußstütze,

Fig. 2   einen Fußstützenhebel mit eingefügter Sperrklinke in Ruhestellung,

Fig. 3   einen Fußstützenhebel mit eingefügter Sperrklinke in Arbeitsstellung,

Fig. 4   eine Draufsicht auf sie Sperrklinke in vergrößerter Darstellung,

Fig. 5    die Seitenansicht zu Fig. 4 und

Fig. 6    eine Seitenansicht der gesamten Fußstütze.

Eine Fußauflage 1 ist verdrehbar zwischen zwei Fußstützenhebeln angeordnet. Die Fußstützenhebel 2 sind in Lagerböcken 3 verschwenkbar gehalten. Die Lagerböcke 3 schließlich sind an einem Vierkantrohr 4 an der Rückseite eines Fahrgastsitzes angebracht. Jeweils endständig in den Fußstützenhebeln ist eine Sperrklinke 5 verschwenkbar angeordnet, was auf einfachste Weise dadurch erreicht wird, daß das runde Kopfteil 6 dieser Sperrklinke in eine entsprechende kreisrunde Aussparung 7 des Fußstützenhebels 2 eingelegt wird. Der Sperrklinke 5 gegenüber ist im Fußstützenhebel 2 eine Blattfeder 8 verankert, die endständig zu der Sperrklinke 5 hin umgefalzt 9 ist. Über eine Bohrung 10 sind die Fußstützenhebel 2 jeweils in einem Rastenkäfig 11 beziehungsweise an dem Lagerbock 3 verschwenkbar geführt.

Der Rastenkäfig 11, der fest mit dem jeweiligen Langerbock 3 verbunden ist, weist Rasten 12 sowie in den Endlagen der Fußstützenhebel 2 Anschläge 13, 14 auf. Seitlich an der Sperrklinke 5 sind Lappen 15 angeformt, die mit diesen Anschlägen 13, 14 zusammenarbeiten.

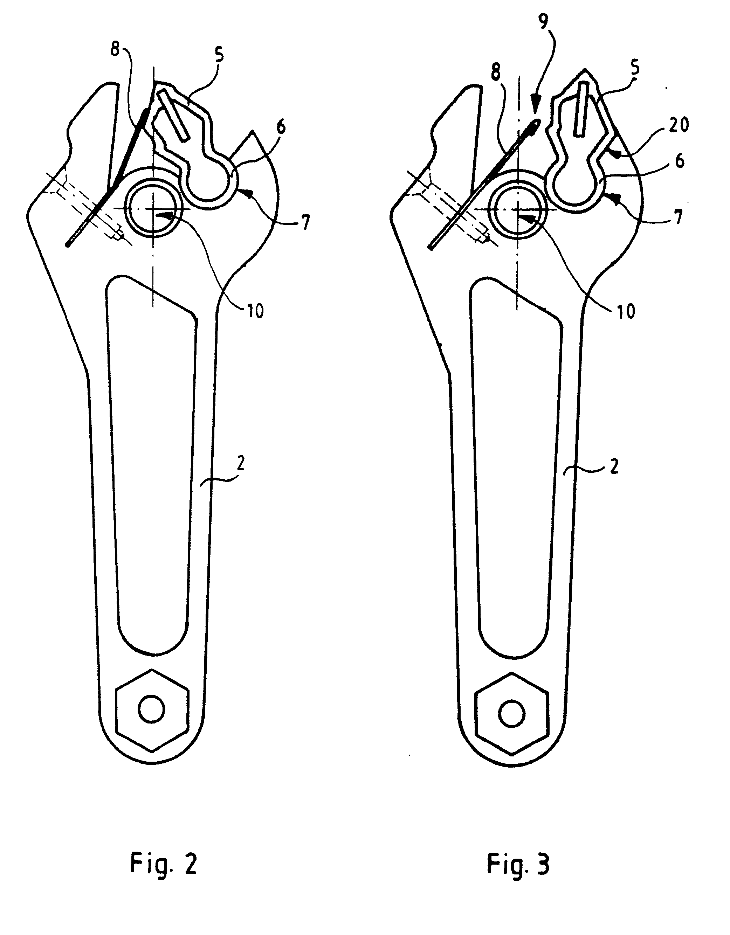

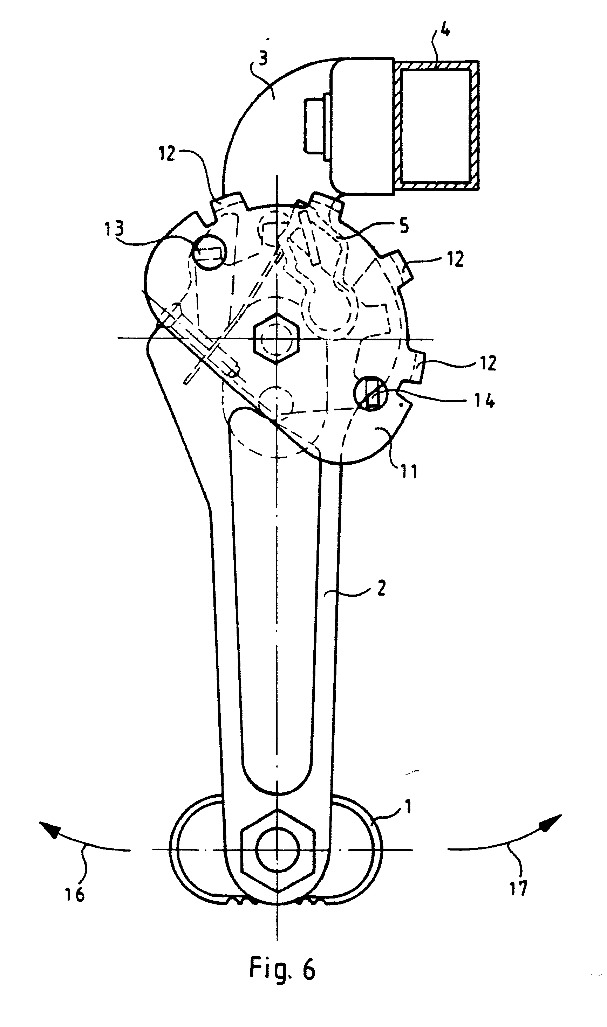

Fig. 6 zeigt eine Seitenansicht der Fußstütze zu Beginn der Aufwärts-Schwenkbewegung 16. Bei dieser Aufwärts-Schwenkbewegung 16 wird die Fußauflage 1 und werden damit die Fußstützenhebel 2 in Richtung des Pfeiles 16 verschwenkt, wodurch die Sperrklinke 5 gegen die Kraft der Blattfeder 8 unter der Raste 12 hindurchgezogen wird. Ist die Sperrklinke 5 unter der Raste 12 hindurchgewandert, wird sie durch die Kraft der Blattfeder 8 wieder in ihre Arbeitslage, wie sie in Fig. 3 dargestellt ist, gedrückt. Bei einer Abwärtsbewegung der Fußauflage 1 entsprechend dem Pfeil 17 legt sich sodann die Sperrklinke mit der Fläche 18 an die Raste 12 und mit der Fläche 19 an eine Anschlagfläche 20 im Fußstützenhebel 2 an. Damit ist die Abwärtsbewegung 17 der Fußauflage 1 beziehungsweise des Fußstützenhebelpaares 2 begrenzt und damit gleichzeitig eine feste Auflage für die Füße auf der Fußauflage 1 gegeben. Da das Zurückschnappen der Sperrklinke durch die Kraft der Blattfeder 8 äußerst weich erfolgt, außerdem das Kunststoffmaterial der Sperrklinke 5 geräuschdämpfend wirkt, erfolgt das Einschnappen der Sperrklinke 5 in diese Stellung nahezu geräuschlos.

Beim Weiterverschwenken in Richtung des Pfeiles 16 schlagen schließlich die Lappen 15 am Anschlag 14 des Rastenkäfigs 11 an, wodurch die Sperrklinke in die in Fig. 2 gezeigte Stellung gedrückt wird, wo die Blattfeder 8 über einen an der Sperrklinke 5 angeformten Höcker 21 gedrückt wird. In dieser Stellung befindet sich die Sperrklinke 5 außer Eingriff mit den Rasten 12 des Rastenkäfigs 11 und wird in dieser Stellung durch den Druck der Blattfeder 8 gehalten. Die Blattfeder 8 ist endständig umgefalzt 9, wodurch sie nicht nur leicht an der Auflauffläche 22 aufläuft (siehe Fig. 6), sondern wodurch auch ein sicherer Halt in der in Fig. 2 gezeigten Stellung der Sperrklinke 5 durch die Feder 8 gegeben ist.

Nunmehr kann die Fußauflage 1 mit ihrem Fußstützenhebelpaar 2, ohne daß die Sperrklinke 5 in die Rasten 12 des Rastenkäfigs 11 einhakt, verschwenkt werden, bis wiederum die an die Sperrklinke 5 angeformten Lappen 15 an den weiteren Anschlag 13 anschlagen und somit die Sperrklinke soweit verschwenkt wird, daß sie wiederum die in Fig. 6 gezeigte Stellung einnimmt. Nun kann die Fußauflage 1 mit dem Fußstützenhebelpaar 2 wieder rastenweise nach oben (Pfeil 16) verschwenkt werden.

**Patentansprüche**

1.   Fußstütze für Fahrgastsitze, bei der die Fußauflage (1) beidseitig an Fußstützenhebeln (2) angebracht ist, die ihrerseits in an der Rückseite eines Fahrgastsitzes angeordneten Lagerböken (3) verschwenkbar gelagert sind, wobei die Verschwenkbewegung durch einen Klinkenmechanismus so zu steuern ist, daß bei der Aufwärtsbewegung mehrere Raststufen einstellbar sind, die bei der Abwärtsbewegung von der höchsten Lage aus zu überfahren sind,
     dadurch gekennzeichnet,
     daß jeweils endständig im Fußstützenhebel (2) eine durch eine Blattfeder (8) belastete Sperrklinke (5) verschwenkbar angeordnet und am Lagerbock (3) ein Rastenkäfig (11) für diese Sperrklinke (5) angebracht ist, der in beiden Extremlagen der Fußstützenhebel (2) auf die Sperrklinke (5) einwirkende Anschläge (13, 14) aufweist und daß an der Sperrklinke (5) ein Höcker (21) vorgesehen ist, auf den sich die belastende Feder (8) in der oberen Extremlage aufschiebt.

2.   Fußstütze nach Anspruch 1,
     dadurch gekennzeichnet,
     daß die Sperrklinke (5) aus verschleißfestem Kunststoff ist.

3.   Fußstütze nach Anspruch 1,
     dadurch gekennzeichnet,
     daß die Blattfeder (8) endständig umgefalzt (9) ist.

**Claims**

1.   A foot rest for passenger seats wherein the foot support (1) is mounted on both sides on foot rest levers (2) which in turn are mounted pivotably in mounting members (3) disposed at the rear side of a passenger seat, wherein the pivotal movement is to be controlled by a pawl mechanism in such a way that a plurality of detent stages can be set in the upward movement, which stages are to be passed over in the downward movement from the highest position, characterised in that a locking pawl (5) which is loaded by a leaf spring (8) is pivotably arranged at the end in each foot rest lever (2) and mounted on the mounting member (3) is a detent cage (11) for said locking pawl (5), the detent cage (11) having abutments (13, 14) acting on the locking pawl (5) in both limit positions of the foot rest levers (2), and that provided on the locking pawl (5) is a protuberance (21) on to which the loading spring (8) pushes in the upper limit position.

2. A foot rest according to claim 1 characterised in that the locking pawl (5) is of wear-resistant plastics.

3. A foot rest according to claim 1 characterised in that the leaf spring (8) is folded over at the end (9).

**Revendications**

1. Repose-pieds pour sièges passagers, auquel le support de pieds (1) est appliqué des deux côtés sur des leviers de repose-pieds (2) qui, pour leur part, sont montés de façon pivotante dans des supports (3) disposés à l'arrière d'un siège passager, cependant que le mouvement pivotant doit être commandé par un mécanisme à cliquets de façon à ce que, pendant le mouvement ascendant, plusieurs paliers à crans soient réglables, paliers qui doivent être dépassés pendant le mouvement descendant à partir de la position la plus haute, caractérisé par le fait qu'à chaque fin de position dans le levier du repose-pieds (2) est disposé de façon pivotante un cliquet d'arrêt (5) chargé par un ressort à lames (8), que sur le support (3) est montée pour ce cliquet d'arrêt (s) une cage à crans (11) qui présente, dans les deux positions extrêmes des leviers de repose-pieds (2), des butées (13, 14) agissant sur le cliquet d'arrêt (5) et que sur le cliquet d'arrêt (s) est prévue une bosse (21) sur laquelle le ressort de charge (8) se remet dans la position extrême supérieure.

2. Repose-pieds selon revendication 1,

caractérisé par le fait que le cliquet d'arrêt (5) est en matière plastique résistant à l'usure.

3. Repose-pieds selon revendication 1, caractérisée par le fait que le ressort à lames (8) est serti (9) en fin de position.

Fig. 1

Fig. 4

Fig. 5

Fig. 2

Fig. 3

Fig. 6